# EUROPÄISCHE PATENTANMELDUNG

(11) **EP 0 590 286 A2**
(43) Veröffentlichungstag der Anmeldung: **06.04.1994**
(21) Anmeldenummer: 93113040.5
(22) Anmeldetag: 14.08.1993
(51) Int. Cl.: H04Q 1/14, H05K 5/02, H02B 1/50

(54) **Kabelverzweigerschrank**

(30) Priorität: 30.09.1992 DE 4232787
(71) Anmelder: STEWING KUNSTSTOFFBETRIEB GmbH, D-46282 Dorsten (DE)
(72) Erfinder: Dehling, Helmut, Dipl.-Ing., D-46286 Dorsten (DE)
(74) Vertreter: Honke, Manfred, Dr.-Ing.

(57) **Zusammenfassung**

Es handelt sich um einen Kabelverzweigerschrank mit einem Sockel und einem Kabelverzweigergehäuse, wobei der Sockel in Sockeloberteil (2) und Sockelunterteil (3) unterteilt ist und zwischen beiden ein Höhenausgleichsrahmen (4) angeordnet ist. Das Sockeloberteil ist an das Kabelverzweigergehäuse (1) angeformt. Der Höhensausgleichsrahmen ist an das Sockelunterteil angeformt. Dadurch wird eine in fertigungstechnischer und montagetechnischer Hinsicht optimierte Bauweise erreicht.

## Beschreibung

Die Erfindung betrifft einen Kabelverzweigerschrank, mit einem Sockel und einem auf dem Sockel montierbaren Kabelverzweigergehäuse, wobei der Sockel in ein Sockeloberteil und ein Sockelunterteil unterteilt ist und zwischen dem Sockeloberteil und dem Sockelunterteil ein Höhenausgleichsrahmen mit einer Montageschulter und einem Montagehals angeordnet ist und das Sockeloberteil einen den Montagehals umgreifenden Montagekragen aufweist und mittels in den Höhenausgleichsrahmen verankerter Justierschrauben auf dem Sockelunterteil bzw. Höhenausgleichsrahmen höhen- und neigungsverstellbar befestigt ist.

Kabelverzweigerschränke sind in verschiedenen Ausführungsformen bekannt und dienen zur fernmeldetechnischen Versorgung von z. B. Straßenzügen, werden aber auch als Verstärkerschränke für die Breitbandkommunikation eingesetzt. Bei den bekannten Ausführungsformen bilden das Kabelverzweigergehäuse, das Sockeloberteil, das Sockelunterteil und der zwischengeschaltete Höhenausgleichsrahmen getrennte Bauteile. Der Höhenausgleichsrahmen dient im übrigen dazu, eine Angleichung an die Erdoberkante herbeizuführen, zumal das Sockelteil in Abhängigkeit von der jeweiligen Kabeltrasse für unterirdischen Einbau bestimmt ist und regelmäßig nicht mit der Erdoberkante fluchtet. Das Sockelunterteil ist im allgemeinen mehrteilig ausgeführt. Das gilt auch für einen häufig im Bereich der Kabeleinführungsöffnung des Sockelunterteils angeflanschten Kabeleinführungsstutzen. - Im Ergebnis ist die mehrteilige Bauweise bei den bekannten Kabelverzweigerschränken in fertigungs- und montagetechnischer Hinsicht aufwendig. Hier will die Erfindung Abhilfe schaffen.

Der Erfindung liegt die Aufgabe zugrunde, einen Kabelverzweigerschrank der eingangs beschriebenen Ausführungsform zu schaffen, der sich durch eine in fertigungs- und montagetechnischer Hinsicht einfache und kompakte Bauweise auszeichnet.

Diese Aufgabe löst die Erfindung bei einem gattungsgemäßen Kabelverzweigerschrank dadurch, daß das Sockeloberteil an das Kabelverzweigergehäuse angeformt ist und daß der Höhenausgleichsrahmen an das Sockelunterteil angeformt ist. - Diese Maßnahmen der Erfindung haben zunächst einmal zur Folge, daß das Kabelverzweigergehäuse und das Sockeloberteil ebenso wie der Höhenausgleichsrahmen und das Sockelunterteil jeweils ein einteiliges Bauteil bilden. Folglich ist nicht länger eine getrennte Fertigung und Montage des Kabelverzweigergehäuses und des Sockeloberteils einerseits sowie des Sockelunterteils und des Höhenausgleichsrahmens andererseits erforderlich. - Das Sockelunterteil weist im allgemeinen im Bereich des Sockelfußes eine zu einer Kabeleinführungsöffnung führende Kabelrutsche und einen sich in Verlängerung der Kabelrutsche an die Kabeleinführungsöffnung anschließenden Kabeleinführungsstutzen mit Stutzenoberteil und Stutzenunterteil auf, wobei oberhalb der Kabelrutsche ein sich bis in den Kabeieinführungsstutzen erstreckender Kabelumlenkbogen und oberhalb des Kabelumlenkbogens eine Verschlußplatte angeordnet ist. In diesem Zusammenhang schlägt die Erfindung vor, und diesem Vorschlag kommt selbständige Bedeutung zu, daß das Sockelunterteil mit der einen Längsseite und den zwei Breitseiten des rechteckigen Höhenausgleichsrahmens, mit der Kabelrutsche und dem Stutzenunterteil des Kabeleinführungsstutzens als einteiliges Bauteil ausgeoildet ist, und daß die Verschlußplatte mit der anderen Längsseite des Höhenausgleichsrahmens, mit dem Kabelumlenkbogen und dem Stutzenoberteil des Kabeleinführungsstutzens als einteiliges Bauteil ausgebildet ist. Auf diese Weise wird erreicht, daß das Sockelunterteil praktisch nur aus einem Hinterteil und einem Vorderteil besteht. Auch das ist in fertigungstechnischer und montagetechnischer Hinsicht optimal. Zweckmäßigerweise sind auf dem vorkragenden Kabelumlenkbogen in Umlenkrichtung verlaufende Versteifungsrippen und gegebenenfalls oberhalb des Kabelumlenkbogens eine quer verlaufende Einformung in der Verschlußplatte zu deren Versteifung vorgesehen, so daß eine sonst verhältnismäßig aufwendige Innenverrippung zur Versteifung der Verschlußplatte entfällt. Vorzugsweise weist das Sockelunterteil in den Eckbereichen des angeformten Höhenausgleichsrahmens Konsolen zur Verankerung der Justierschrauben auf, während das an das Kabelverzweigergehäuse angeformte Sockeloberteil in den Eckbereichen oberhalb des Montagekragens entsprechende Schraubenaufnahmen bzw. -bohrungen aufweist. Mit Hilfe der Justierschrauben läßt sich das Kabelverzweigergehäuse mit dem Sockeloberteil in Höhe und Neigung ausrichten. Diese Ausrichtung ist in bezug auf die Erdoberkante regelmäßig erforderlich, auch unter Berücksichtigung der Tatsache, daß sich das Sockelunterteil bisweilen nicht mit einwandfreier Ausrichtung in Höhe und Neigung in bezug auf die Erdoberkante in das Erdreich einbauen läßt. Die Ausrichtung des Kabelverzweigergehäuses mit dem angeformten Sockeloberteil mit Hilfe der Justierschrauben ist möglich, weil das Sockeloberteil bzw. sein Montagekragen den Montagehals am Höhenausgleichsrahmen des Sockelunterteils mit hinreichendem Bewegungsspiel umfaßt. Dennoch wird aufgrund der Überlappung von Montagekragen und Montagehals einerseits eine durchgehende Fuge vermieden, andererseits Stochersicherheit und Feuchtigkeitsschutz erreicht. Um die Justierschrauben zugänglich zu machen und die Kabelverlegung zu vereinfachen, kann das an das Kabelverzeigergehäuse angeformte Sockeloberteil frontseitig in an sich bekannter Weise eine Verschlußklappe aufweisen.

Im folgenden wird die Erfindung anhand einer lediglich ein Ausführungsbeispiel darstellenden Zeichnung näher erläutert; Es zeigen:

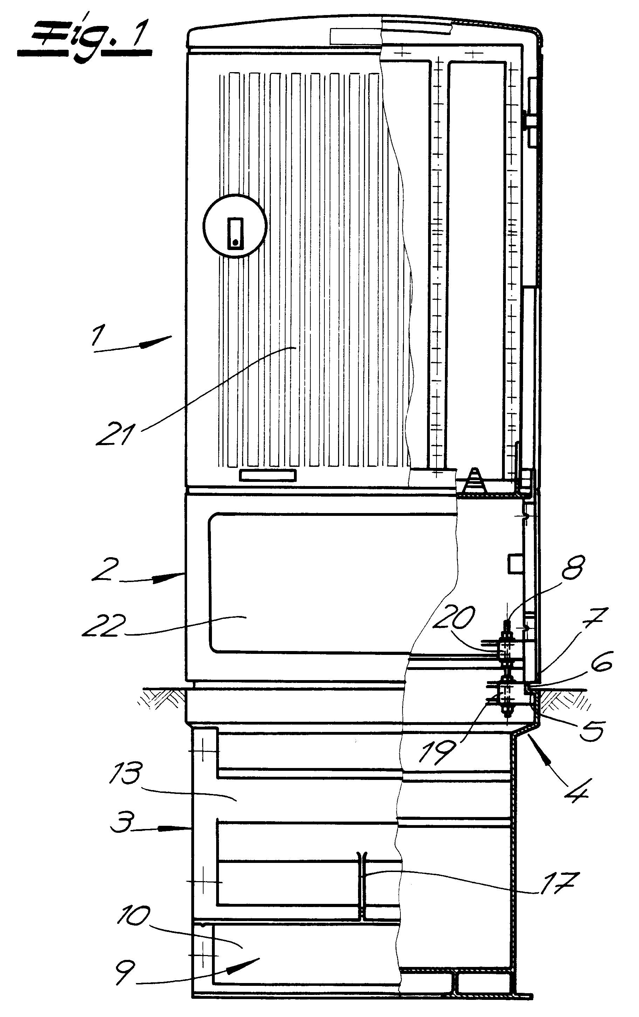

- Fig. 1: einen erfindungsgemäßen Kabelverzweigerschrank in Frontansicht und teilweise fortgebrochener Frontseite,

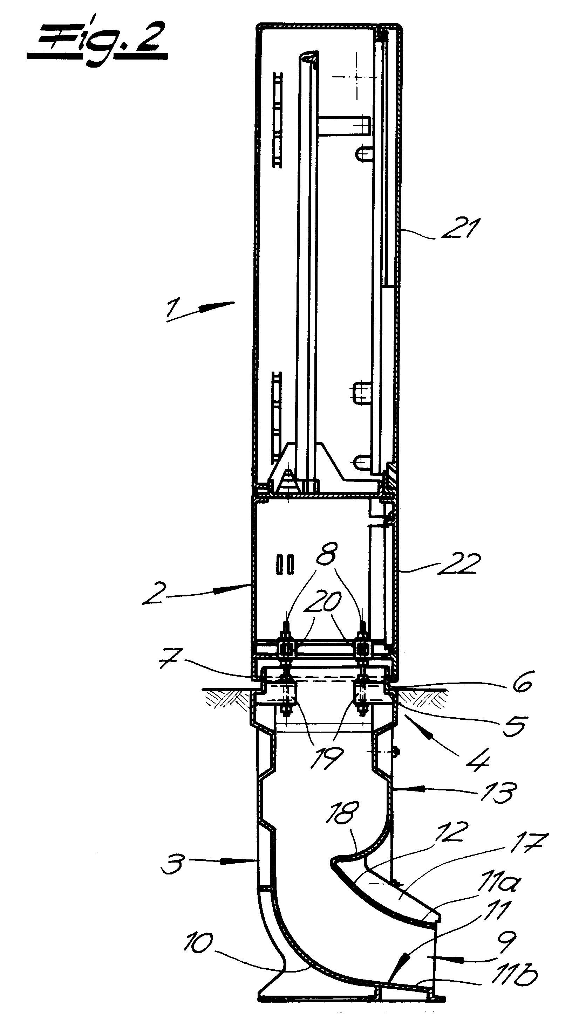

- Fig. 2: einen Vertikalschnitt durch den Gegenstand nach Fig. 1,

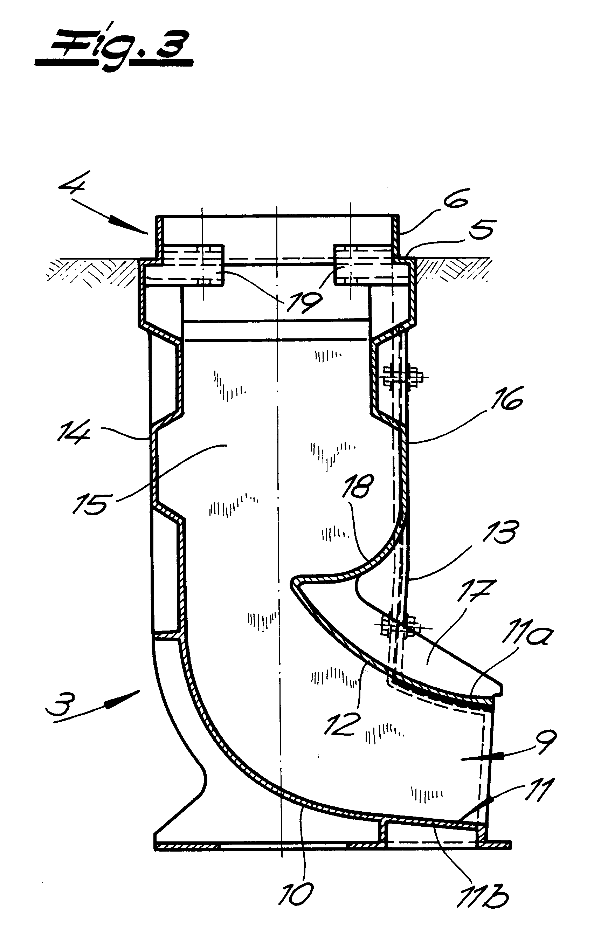

- Fig. 3: lediglich das Sockelunterteil mit angeformtem Höhenausgleichsrahmen im Vertikalschnitt,

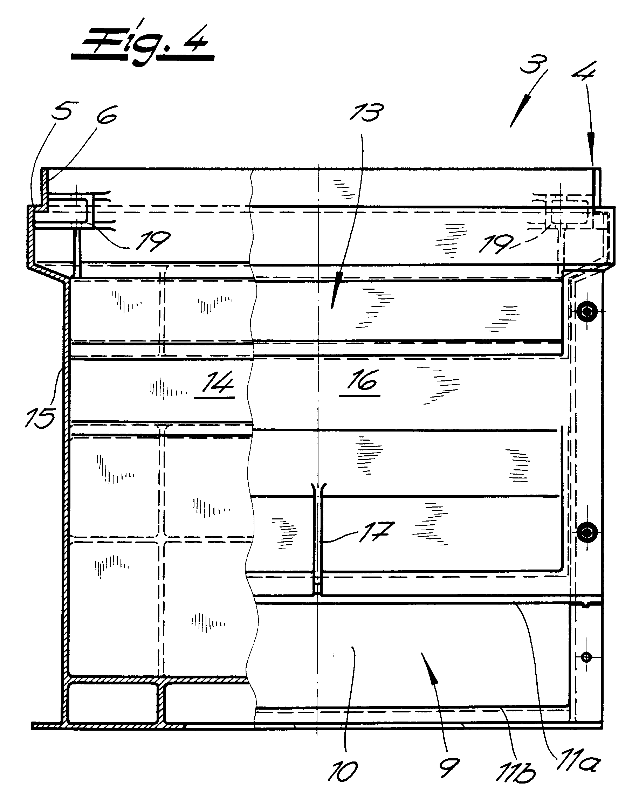

- Fig. 4: den Gegenstand nach Fig. 3 in Frontansicht mit teilweise fortgebrochener Verschlußplatte und

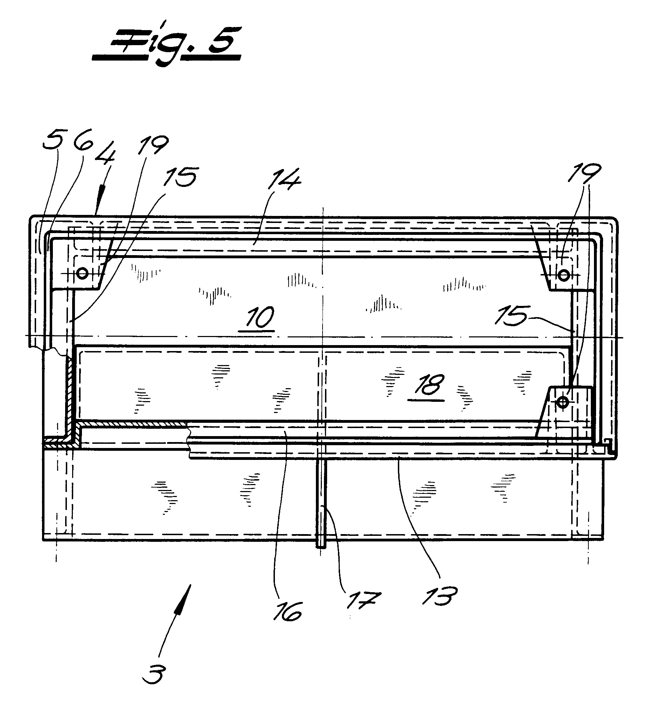

- Fig. 5: den Gegenstand nach Fig. 3 in Aufsicht.

In den Figuren ist ein Kabelverzweigerschrank mit einem Sockel und einem auf dem Sockel montierbaren Kabelverzweigergehäuse 1 dargestellt. Der Sockel ist in ein Sockeloberteil 2 und ein Sockelunterteil 3 unterteilt. Zwischen dem Sockeloberteil 2 und dem Sockelunterteil 3 ist ein Höhenausgleichsrahmen 4 mit einer Montageschulter 5 und einem Montagehals 6 angeordnet. Das Sockeloberteil 2 weist einen unter Bildung einer stochersicheren und nicht durchgehenden Fuge den Montagehals 6 mit vorgegebenem Bewegungsspiel umgreifenden Montagekragen 7 auf und ist mittels in den Höhenausgleichsrahmen 4 verankerter Justierschrauben 8 - oder im Bereich des Montagekragens 7 verankerter Justierschrauben - auf dem Sockelunterteil 3 bzw. dem Höhenausgleichsrahmen 4 höhen- und neigungsverstellbar befestigt. Das Sockeloberteil 2 ist an das Kabelverzweigergehäuse 1 angeformt. Der Höhenausgleichsrahmen 4 ist an das Sockelunterteil 3 angeformt. Das Sockelunterteil 3 weist im Bereich des Sockelfußes eine zu einer Kabeleinführungsöffnung 9 führende Kabelrutsche 10 und einen sich in Verlängerung der Kabelrutsche 10 an die Kabeleinführungsöffnung 9 anschließenden Kabeleinführungsstutzen 11 mit Stutzenoberteil 11a und Stutzenunterteil 11b auf. Oberhalb der Kabelrutsche 10 ist ein sich bis in den Kabeleinführungsstutzen 11 erstreckender Kabelumlenkbogen 12 und oberhalb des Kabelumlenkbogens 12 eine Verschlußplatte 13 angeordnet. Das Sockelunterteil 3 ist mit der einen Längsseite 14 und den beiden Breitseiten 15 des rechteckigen Höhenausgleichsrahmens 4 mit der Kabelrutsche 10 und mit dem Stutzenunterteil 11b des Kabeleinführungsstutzens 11 als einteiliges Bauteil ausgebildet. Ferner ist die Verschlußplatte 13 mit der anderen Längsseite 16 des Höhenausgleichsrahmens 4, mit dem Kabelumlenkbogen 12 und dem Stutzenoberteil 11a des Kabeleinführungsstutzens 11 - in Verlängerung des Kabelumlenkbogens - als einteiliges Bauteil ausgebildet, so daß das Sockelunterteil 3 praktisch lediglich aus einem Hinterteil und einem Vorderteil besteht. Die Verschlußplatte 13 läßt sich beidseitig mit dem Sockelunterteil 3 bzw. seinem Hinterteil verschrauben. Auf dem vorkragenden Kabelumlenkbogen 12 sind in Umlenkrichtung verlaufende Versteifungsrippen 17 vorgesehen. Oberhalb des Kabelumlenkbogens 12 ist eine quer verlaufende Einformung 18 in der Verschlußplatte 13 zu deren Versteifung vorgesehen. Das Sockelunterteil 3 weist in den Eckbereichen des Höhenausgleichsrahmens 4 Konsolen 19 zur Verankerung der Justierschrauben 8 auf. Das an das Kabelverzweigergehäuse 1 angeformte Sockeloberteil 2 weist in den Eckbereichen oberhalb des Montagekragens 7 entsprechende Schraubenaufnahmen 20 bzw. -bohrungen auf. - Im übrigen besitzt das Kabelverzweigergehäuse 1 eine hochschiebbare Frontplatte 21, während das angeformte Sockeloberteil 2 frontseitig eine Verschlußklappe 22 aufweist.

Der Kabelverzweigerschrank bzw. seine Bauteile bestehen aus Kunststoff, vorzugsweise Polycarbonat.

## Patentansprüche

1. Kabelverzweigerschrank, mit einem Sockel und einem auf dem Sockel montierbaren Kabelverzweigergehäuse, wobei der Sockel in ein Sockeloberteil und ein Sockelunterteil unterteilt ist und zwischen dem Sockeloberteil und dem Sockelunterteil ein Höhenausgleichsrahmen mit einer Montageschulter und einem Montagehals angeordnet ist und das Sockeloberteil einen den Montagehals umgreifenden Montagekragen aufweist und mittels in dem Höhenausgleichsrahmen verankerter Justierschrauben auf dem Höhenausgleichsrahmen höhen- und neigungsverstellbar befestigt ist, **dadurch gekennzeichnet,** daß das Sockeloberteil (2) an das Kabelverzweigergehäuse (1) angeformt ist und daß der Höhenausgleichsrahmen (4) an das Sockelunterteil (3) angeformt ist.

2. Kabelverzweigerschrank nach Anspruch 1, wobei das Sockelunterteil im Bereich des Sockelfußes eine zu einer Kabeleinführungsöffnung führende Kabelrutsche und einen sich in Verlängerung der Kabelrutsche an die Kabeleinführungsöffnung anschließenden Kabeleinführungsstutzen mit Stutzenoberteil und Stutzenunterteil aufweist und oberhalb der Kabelrutsche ein sich bis in den Kabeleinführungsstutzen erstreckender Kabelumlenkbogen und oberhalb des Kabelumlenkbogens eine Verschlußplatte angeordnet ist, dadurch gekennzeichnet, daß das Sockelunterteil (3) mit der einen Längsseite (14) und den zwei Breitseiten (15) des rechteckigen Höhenausgleichsrahmens (4), mit der Kabelrutsche (10) und mit Stutzenunterteil (11b) des Kabeleinführungsstutzens (11) als einteiliges Bauteil ausgebildet ist, und daß die Verschlußplatte (13) mit der anderen Längsseite (16) des Höhenausgleichsrahmens (4), mit dem Kabelumlenkbogen (12) und dem Stutzenoberteil (11a) des Kabeleinführungsstutzens (11) als einteiliges Bauteil ausgebildet ist.

3. Kabelverzweigerschrank nach Anspruch 1 oder 2, dadurch gekennzeichnet, daß auf dem vorkragenden Kabelumlenkbogen (12) Versteifungsrippen (17) und gegebenenfalls oberhalb des Kabelumlenkbogens (12) eine quer verlaufende Einformung (18) in der Verschlußplatte (13) zu deren Versteifung vorgesehen ist.

4. Kabelverzweigerschrank nach einem der Ansprüche 1 bis 3, dadurch gekennzeichnet, daß das Sockelunterteil (3) in den Eckbereichen des angeformten Höhenausgleichsrahmens (4) Konsolen (19) zur Verankerung der Justierschrauben (8) aufweist, und daß das an das Kabelverzweigergehäuse (1) angeformte Sockeloberteil (2) in den Eckbereichen oberhalb des Montagekragens (7) entsprechende Schraubenaufnahmen (20) bzw. -bohrungen aufweist.

5. Kabelverzweigerschrank nach einem der Ansprüche 1 bis 4, dadurch gekennzeichnet, daß das an das Kabelverzweigergehäuse (1) angeformte Sockeloberteil (2) frontseitig eine Verschlußklappe (22) aufweist.
